# EUROPEAN PATENT APPLICATION

(11) **EP 4 668 413 A1**
(43) Date of publication of application: **24.12.2025**
(21) Application number: 24216897.9
(22) Date of filing: 02.12.2024
(51) Int. Cl.: H01M 10/613, H01M 10/625, H01M 10/647, H01M 10/6554, H01M 10/6556, H01M 10/6568, H01M 50/209, H01M 50/249, H01M 50/258, H01M 50/291, H01M 10/6557, H01M 10/6555

(54) **BATTERY PACK AND BATTERY MODULE**

(30) Priority: 18.06.2024 CN 202421396347 U; 19.08.2024 WO PCT/CN2024/113107
(71) Applicant: Eve Energy Co., Ltd., Huizhou, Guangdong 516006 (CN)
(72) Inventor: FU, Weiyin, GUANGDONG 516006 (CN)
(74) Representative: Cabinet Beaumont

(57) **Abstract**

A battery pack includes enclosure plates (1), a liquid cooling plate (2) and battery cells (3). The battery cells (3) are mounted on the liquid cooling plate (1), the enclosure plates (1) surround the liquid cooling plate (2) and the battery cells (3), and the liquid cooling plate (2) is connected to the enclosure plates (1); an accommodating cavity (4) is provided between the enclosure plates (1) and the battery cells (3); the liquid cooling plate (2) is connected with an outlet pipe (20) and an inlet pipe (21), and the outlet pipe (20) and the inlet pipe (21) are both located in the accommodating cavity (4); a top surface and a bottom surface of an enclosure plate (1) are each provided with a connecting component.

## Description

### TECHNICAL FIELD

The present application relates to the technical field of battery packs and, in particular, to a battery pack and a battery module.

### BACKGROUND

As the energy source of new energy vehicles, batteries are one of the most important components of new energy vehicles. A battery on a new energy vehicle is usually a battery module consisting of multiple battery packs electrically connected. Different models of new energy vehicles have different demands for electrical energy. For example, medium and large vehicles usually require more abundant electrical energy reserves, while small vehicles only need less electrical energy reserves. Therefore, battery modules on medium and large vehicles contain more battery packs than battery modules on small cars.

### TECHNICAL PROBLEM

Current battery packs have a low degree of modularity. When multiple battery packs are connected, additional fixing frames are required to fix and combine the multiple battery backs together, resulting in low assembly efficiency.

### SUMMARY

In a first aspect, embodiments of the present application provide a battery pack. The battery pack includes enclosure plates, a liquid cooling plate and battery cells, where the battery cells are mounted on the liquid cooling plate, the enclosure plates surround the liquid cooling plate and the battery cells, and the liquid cooling plate is connected to the enclosure plates; an accommodating cavity is provided between the enclosure plates and the battery cells; the liquid cooling plate is connected with an outlet pipe and an inlet pipe, and the outlet pipe and the inlet pipe are both located in the accommodating cavity; an output electrode is disposed on the battery cells, and the output electrode is located in the accommodating cavity; a top surface and a bottom surface of an enclosure plate of the enclosure plates are each provided with a connecting component capable of engaging with each other.

In a second aspect, the embodiments of the present application provide a battery module. The battery module includes multiple preceding battery packs, the multiple battery packs are stacked and assembled, and two adjacent battery packs of the multiple battery packs are connected through the connecting component.

### BENEFICIAL EFFECTS

The enclosure plates surround the liquid cooling plate and the battery cells, and the inlet pipe, the outlet pipe and the output electrode are located in the accommodating cavity between the enclosure plates and the liquid cooling plate, so electrical connectors and liquid cooling connectors can be surrounded by the enclosure plates without being exposed to the outside. Moreover, the top surface and the bottom surface of the enclosure plate are each provided with a connecting component capable of engaging with each other, and the liquid cooling plate is fixedly connected to the enclosure plates. Enclosure plates of two battery packs engage with each other through connecting components, so the two battery packs can be stacked and assembled up and down, simplifying the operation of assembling battery packs into a battery module.

### BRIEF DESCRIPTION OF DRAWINGS

FIG. 1 is a view showing the overall structure of embodiments of a battery pack according to the present application;
FIG. 2 is a view showing the internal structure of embodiments of a battery pack according to the present application;
FIG. 3 is a view showing the internal structure of embodiments of battery packs in a stacking state according to the present application;
FIG. 4 is an enlarged view of part A in FIG. 3;
FIG. 5 is a view showing the structure of a connecting component in other embodiments according to the present application; and
FIG. 6 is a view showing the overall structure of embodiments of a battery module according to the present application.

### Reference list

- 1: enclosure plate
- 2: liquid cooling plate
- 3: battery cell
- 4: accommodating cavity
- 5: insert
- 6: groove
- 7: first insert
- 8: first groove
- 9: second insert
- 10: second groove
- 11: limit plate
- 12: support plate
- 13: reinforcing plate
- 14: top plate
- 15: outlet main pipe
- 16: inlet main pipe
- 17: copper bar
- 18: high-voltage connector
- 19: output electrode
- 20: outlet pipe
- 21: inlet pipe

### DETAILED DESCRIPTION

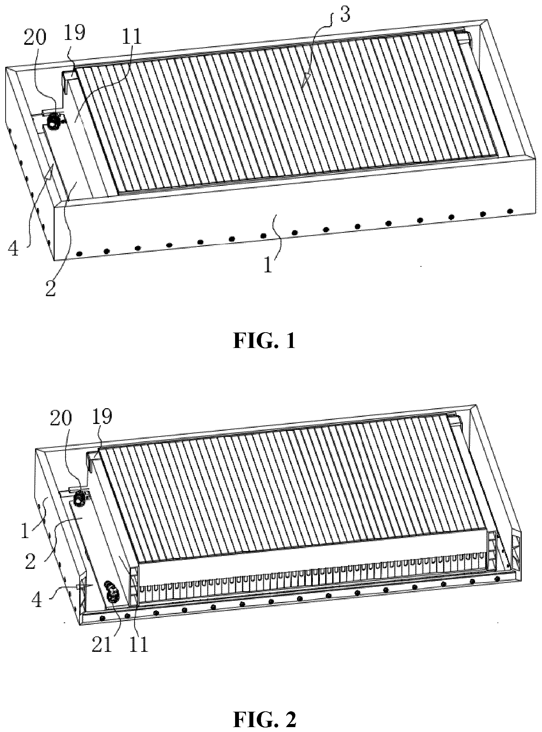

FIG. 1 shows an example of a battery pack of the present application. The battery pack includes enclosure plates 1, a liquid cooling plate 2 and battery cells 3; the battery cells 3 are mounted on the liquid cooling plate 2, the enclosure plates 1 surround the liquid cooling plate 2 and the battery cells 3, and the liquid cooling plate 2 is connected to the enclosure plates 1; at least one accommodating cavity 4 is provided between the enclosure plates 1 and the liquid cooling plate 2; the liquid cooling plate 2 is connected with an outlet pipe 20 and an inlet pipe 21, the liquid cooling plate 2 communicates with the outlet pipe 20 and the inlet pipe 21, and the outlet pipe 20 and the inlet pipe 21 are both located in the accommodating cavity 4; an output electrode 19 is disposed on the battery cells 3, and the output electrode 19 is located in the accommodating cavity 4; a top surface and a bottom surface of an enclosure plate 1 are each provided with a connecting component capable of engaging with a connecting component of another enclosure plate 1.

The liquid cooling plate 2 is a rectangular hollow plate, and the inlet pipe 21 and the outlet pipe 20 are both located at an end of the liquid cooling plate 2 in a length direction of the liquid cooling plate 2. Multiple battery cells 3 are arranged on the liquid cooling plate 2 along the length direction of the liquid cooling plate 2. Each of the enclosure plates 1 is generally rectangular in shape, and the enclosure plates 1 surround the outer side of the liquid cooling plate 2. Two length side edges of the liquid cooling plate 2 are welded to the enclosure plates 1 so that a fixing effect is achieved. Certain gaps exist between two outside surfaces of the arranged battery cells 3 and the enclosure plates 1 so that two accommodating cavities 4 are formed. The enclosure plates 1 include four plates, that is, two plates arranged in a width direction of the arranged battery cells 3 and two plates arranged in the length direction of the arranged battery cells 3. Two adjacent plates of the enclosure plates are connected by bolts or welding. In the embodiments, two adjacent plates of the enclosure plates are connected by welding. Two width side edges of each plate are bevels so that the contact area between two adjacent plates can be increased, and thus the two adjacent plates can be welded more firmly. The enclosure plates 1 surround the liquid cooling plate 2 and the battery cells 3, and the inlet pipe 21, the outlet pipe 20 and the output electrode 19 are located in the accommodating cavity 4 between the enclosure plates 1 and the liquid cooling plate 2, so electrical connectors and liquid cooling connectors can be surrounded by the enclosure plates 1 without being exposed to the outside. Moreover, the top surface and the bottom surface of each of the enclosure plates 1 are each provided with a connecting component capable of engaging with each other, and the liquid cooling plate 2 is fixedly connected to the enclosure plates 1. Enclosure plates 1 of two battery packs engage with each other through connecting components, so the two battery packs can be stacked and assembled up and down, simplifying the operation of assembling battery packs into a battery module.

In some embodiments, the connecting component includes a first insert 7, a first groove 8, a second insert 9 and a second groove 10; the first insert 7 and the first groove 8 are provided on the top surface of an enclosure plate 1 of the enclosure plates 1; the second insert 9 and the second groove 10 are provided on the bottom surface of the enclosure plate 1; the first insert 7 is configured to fit with a second groove 10 of another enclosure plate 1; the second insert 9 is configured to fit with a first groove 8 of another enclosure plate 1.

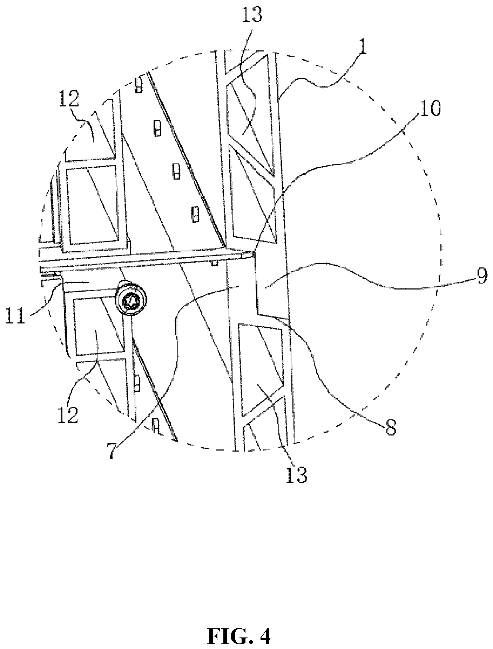

Referring to FIG. 1 to FIG. 4, the first insert 7 is plate-shaped and is provided in an extension direction of the top end of the enclosure plate 1. The first insert 7 is integrally formed with the enclosure plate 1 and is located on a side of the top surface of the enclosure plate 1 facing the liquid cooling plate 2, and a side of the top surface of the enclosure plate 1 facing away from the liquid cooling plate 2 forms the first groove 8. The second insert 9 is located on a side of the bottom surface of the enclosure plate 1 facing away from the liquid cooling plate 2, and a side of the bottom surface of the enclosure plate 1 facing the liquid cooling plate 2 forms the second groove 10. The shape of the first insert 7 is the same as the shape of the second insert 9. In this manner, when two adjacent enclosure plates 1 are stacked together, the second insert 9 of the upper enclosure plate 1 is inserted into the first groove 8 of the lower enclosure plate 1, and the first insert 7 of the lower enclosure plate 1 is inserted into the second groove 10 of the upper enclosure plate 1. First inserts 7 and second inserts 9 form mortise and tenon structures. To improve the firmness of the connection between two adjacent enclosure plates 1, after two enclosure plates 1 are spliced, bolts or other fasteners may be inserted from the overlapping part of the first insert 7 and the second insert 9, that is, the bolts keep the first insert 7 and the second insert 9 fixed relative to each other, thereby enabling two adjacent enclosure plates 1 to be fixedly connected.

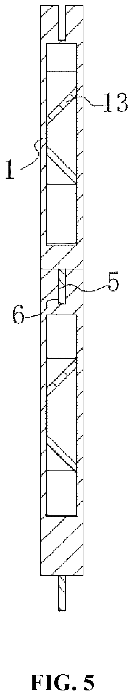

In other embodiments, referring to FIG. 5, the connecting component may include an insert 5 and a groove 6. The insert 5 is provided on the bottom surface of an enclosure plate 1; the groove 6 is provided on the top surface of the enclosure plate 1.

When two battery packs are spliced and assembled, the insert 5 of the upper enclosure plate 1 of the two battery packs is inserted into the groove 6 of the lower enclosure plate 1 of the two battery packs, thus achieving splicing of enclosure plates 1 of the two battery packs. The insert 5 is a plate-shaped component provided along the bottom surface of the enclosure plate 1. The insert 5 is arranged along an extension direction of the bottom end of the enclosure plate 1. The insert 5 may be welded to or integrally formed with the enclosure plate 1 for being connected to the enclosure plate 1. In the embodiment, the insert 5 is integrally formed with the enclosure plate 1, and the groove 6 is provided correspondingly to the insert 5. To improve the firmness of the connection between two adjacent enclosure plates 1, after two enclosure plates 1 are spliced through the insert 5 and the groove 6, bolts or other fasteners may be used for penetrating the enclosure plate 1 from the connecting part of the insert 5 and the groove 6, that is, the bolts pass through the insert 5 and the groove 6, thereby maintaining relative fixing between the insert 5 and the groove 6.

In some embodiments, multiple limit plates 11 are disposed on the liquid cooling plate 2, and the multiple limit plates 11 abut two outside surfaces of multiple arranged battery cells 3 in an extension direction of the arrangement of the battery cells 3, where the extension direction of the battery cells 3 is a staking and arrangement direction of the battery cells 3; the multiple limit plates 11 are fixedly connected to the enclosure plate 1.

A limit plate 11 is rectangular. A length direction of the limit plate 11 is a width direction of the arranged and stacked battery cells 3, two width edges of the limit plate 11 are welded to two enclosure plates 1, and a bottom surface of the limit plate 11 is welded to the liquid cooling plate 2. The limit plates 11, the liquid cooling plate 2 and the enclosure plates 1 tightly surround the battery cells 3 to prevent the battery cells 3 from swelling. The accommodating cavity 4 is located on a side of the limit plate 11 facing away from the battery cells 3.

In some embodiments, the limit plate 11 is hollow inside, which can reduce the weight of the limit plate 11, reduce the weight borne on the liquid cooling plate 2, and avoid deformation of the liquid cooling plate 2.

In some embodiments, a support plate 12 is disposed inside the limit plate 11, where the support plate 12 is configured to extend in the arrangement direction of the battery cells 3 to enhance the structural strength of the limit plate 11 in the arrangement direction of the battery cells 3.

The limit plates 11 are used for counteracting the expansion of the battery cells 3, therefore the limit plates 11 need sufficient structural strength to avoid deformation. The support plate 12 is rectangular, and a length direction of the support plate 12 is in the same direction as the length direction of the limit plate 11. The support plate 12 is parallel to a top surface and a bottom surface of the limit plate 11. Two side edges of the support plate 12 distributed in a width direction of the support plate 12 are welded to inner side walls of the limit plate 11, that is, the structural strength of the limit plate 11 is strengthened from the width direction of the support plate 12. Any number of support plates 12 may be disposed inside the limit plate 11. In some embodiments, three support plates 12 are disposed inside the limit plate 11, and the three support plates 12 are arranged at intervals in a width direction of the limit plate 11, so the structural strength of the limit plate 11 can be improved while the weight of the limit plate 11 is reduced.

In other embodiments, two side edges of the support plate 12 arranged along the length direction of the support plate 12 abut the top surface and the bottom surface of the limit plate 11 respectively, and the two side edges of the support plate 12 arranged along the width direction of the support plate 12 are welded to two side walls of the limit plate 11 respectively to improve the structural strength of the limit plate 11 from the width direction of the support plate 12. In the embodiments, to achieve this setting manner of the support plate 12, multiple support plates 12 need to be arranged in the limit plate 11 in parallel in the length direction of the limit plate 11.

In some embodiments, the enclosure plate 1 is hollow inside, so the weight of the whole battery pack can be reduced, and when multiple battery packs form a battery module, the weight borne by the bottom battery pack can be reduced.

In some embodiments, a reinforcing plate 13 is disposed inside an enclosure plate 1 of the enclosure plates, where the reinforcing plate 13 is configured to enhance the structural strength of the enclosure plate 1.

When battery packs form a battery module, the enclosure plates 1 of each battery pack (except the enclosure plate 1 of the topmost battery pack) need to directly bear the weight from the upper battery pack, so it needs to improve the structural strength of the hollow enclosure plates 1. The reinforcing plate 13 is rectangular, and an extension direction of the reinforcing plate 13 is the same as an extension direction of the enclosure plate 1. The reinforcing plate 13 is inclined inside the enclosure plate 1. A width direction of the reinforcing plate 13 has an angle with the top surface or the bottom surface of the enclosure plate 1. This setting can provide structural reinforcement in a thickness direction and a width direction of the enclosure plate 1. Any number of reinforcing plates 13 in the enclosure plate 1 may be disposed. In some embodiments, two reinforcing plates 13 are disposed in the enclosure plate 1, and the two reinforcing plates 13 are symmetrically disposed with the centerline of the width of the enclosure plate 1 as the axis, so the structural strength of the enclosure plate 1 can be improved while the weight of the enclosure plate 1 is reduced.

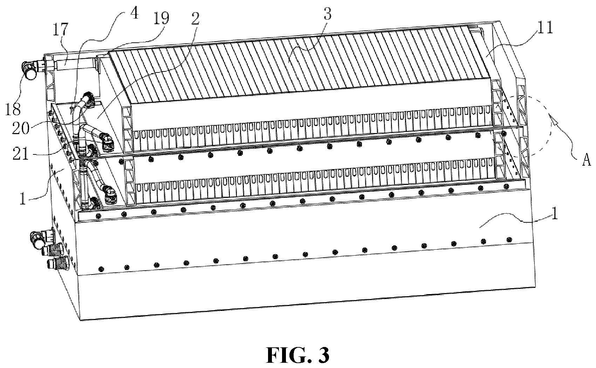

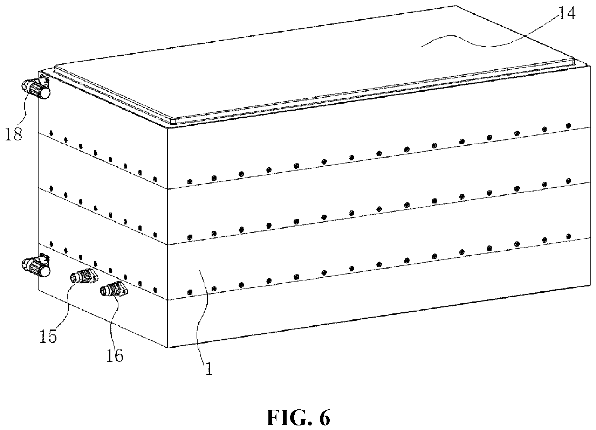

FIG. 3 to FIG. 6 show embodiments of a battery module of the present application. The battery module includes four stacked battery packs described above, and two adjacent battery packs are connected by connecting components engaging with each other.

The top of the topmost battery pack is covered with a top plate 14, while the tops of the other three battery packs are covered by the liquid cooling plate 2 of the upper battery pack. Enclosure plates 1 of two adj acent battery packs engage with each other through the first insert 7 being inserted into the second groove 10 and the second insert 9 being inserted into the first groove 8, and moreover, bolts are inserted into the first insert 7 and the second insert 9, so the two adjacent enclosure plates 1 are fixed together.

In some embodiments, an inlet main pipe 16 and an outlet main pipe 15 are disposed on an enclosure plate 1 of the battery pack facing the accommodating cavity 4; outlet pipes 20 of the stacked battery packs are connected in parallel and connected with the outlet main pipe 15, and inlet pipes 21 of the stacked battery packs are connected in parallel and connected with the inlet main pipe 16.

The inlet main pipe 16 and the outlet main pipe 15 may be disposed on different enclosure plates 1 respectively or may be disposed on the same enclosure plate 1. In some embodiments, the inlet main pipe 16 and the outlet main pipe 15 both pass through the enclosure plate 1 among the enclosure plates 1 of the bottom battery pack, and the enclosure plate 1 faces the accommodating cavity 4 in which the inlet pipe 21 and the outlet pipe 20 are provided. Each of the inlet pipes 21 of the four battery packs is connected to a main pipe through a branch pipe, and the main pipe is then connected to the inlet main pipe 16. Each of the outlet pipes 20 of the four battery packs are separately connected to a main pipe through a branch pipe, and the main pipe is then connected to the outlet main pipe 15. In this manner, coolant can be introduced into four liquid cooling plates 2 as long as coolant is introduced into the inlet main pipe 16; similarly, coolant of the four liquid cooling plates 2 can be led out as long as coolant flowing out from the outlet main pipe 15 is led out. Output electrodes 19 of two adjacent battery packs are electrically connected through copper bars 17. The copper bar 17 of the topmost battery pack is connected to a high-voltage connector 18, and the high-voltage connector 18 passes through the enclosure plate 1 and is configured to be connected with external electric devices. According to that the battery module including the preceding battery packs, electrical connectors (that is, copper bars 17, output electrodes 19, etc.) and liquid cooling connectors (that is, inlet pipes 21, outlet pipes 20, etc.) are contained in the accommodating cavity 4 by the enclosure plates 1 and are not exposed to the outside, damage to the electrical connectors and the liquid cooling connectors is avoided. Moreover, different numbers of battery packs may be provided according to different vehicle models, making assembly simple and fast.

## Claims

1. A battery pack, comprising a plurality of enclosure plates (1), a liquid cooling plate (2) and a plurality of battery cells (3), wherein
the plurality of battery cells (3) are mounted on the liquid cooling plate (2), the plurality of enclosure plates (1) surround the liquid cooling plate (2) and the plurality of battery cells (3), and the liquid cooling plate (2) is connected to the plurality of enclosure plates (1); an accommodating cavity (4) is provided between the plurality of enclosure plates (1) and the plurality of battery cells (1);
the liquid cooling plate (2) is connected with an outlet pipe (20) and an inlet pipe (21), the liquid cooling plate (2) communicates with the outlet pipe (20) and the inlet pipe (21), and the outlet pipe (20) and the inlet pipe (21) are both located in the accommodating cavity (4); and
a top surface and a bottom surface of an enclosure plate (1) of the plurality of enclosure plates (1) are each provided with a connecting component.

2. The battery pack according to claim 1, wherein
the connecting component comprises an insert (5) and a groove (6); and
the insert (5) is provided on the bottom surface of the enclosure plate (1); the groove (6) is provided on the top surface of the enclosure plate (1).

3. The battery pack according to claim 1, wherein
the connecting component comprises a first insert (7), a first groove (8), a second insert (9) and a second groove (10);
the first insert (7) and the first groove (8) are provided on the top surface of the enclosure plate (1); the second insert (9) and the second groove (10) are provided on the bottom surface of the enclosure plate (1); and
the first insert (7) is configured to fit with a second groove (10); the second insert (9) is configured to fit with a first groove (8).

4. The battery pack according to claim 1, wherein
a plurality of limit plates (11) are disposed on the liquid cooling plate (2), and the plurality of limit plates (11) abut two outside surfaces of the battery cells (3) in an arrangement and stacking direction of the battery cells (3); and
the plurality of limit plates (11) are fixedly connected to enclosure plates (1) of the plurality of enclosure plates (1).

5. The battery pack of claim 4, wherein a limit plate (11) of the plurality of limit plates (11) is hollow inside.

6. The battery pack according to claim 5, wherein a support plate (12) is disposed inside the limit plate (11), wherein the support plate (12) is configured to enhance structural strength of the limit plate (11) in the arrangement and stacking direction of the battery cells (3).

7. The battery pack according to any one of claims 1 to 6, wherein an enclosure plate (1) of the plurality of enclosure plates (1) is hollow inside.

8. The battery pack according to claim 7, wherein a reinforcing plate (13) is disposed inside the enclosure plate (1), wherein the reinforcing plate (13) is configured to improve structural strength of the enclosure plate (1).

9. A battery module, comprising a plurality of battery packs according to any one of claims 1 to 8, wherein the plurality of battery packs are stacked and assembled, and two adjacent battery packs of the plurality of battery packs are connected through the connecting component.

10. The battery module according to claim 9, wherein
an inlet main pipe (16) and an outlet main pipe (17) are disposed on an enclosure plate (1) among the plurality of enclosure plates (1), the enclosure plate (1) is disposed along the arrangement and stacking direction of the battery cells (3) and;
outlet pipes (20) of the plurality of battery packs are connected in parallel and connected with the outlet main pipe (15), and inlet pipes (21) of the plurality of battery packs are connected in parallel and connected with the inlet main pipe (16).
